# EUROPEAN PATENT SPECIFICATION

(11) **EP 2 530 439 B1**
(45) Date of publication and mention of the grant of the patent: **06.11.2019**
(21) Application number: 12170328.4
(22) Date of filing: 31.05.2012
(51) Int. Cl.: G01F 15/00, G01F 15/06, G01F 15/14

(54) **Fluid meter equipped with a remote reading module fixed by means of an anti-fraud ring**
Durchflussmesser, der mit einem Fernablesemodul ausgestattet ist, das mithilfe eines betrugssicheren Ringes befestigt ist
Compteur de fluide équipé d'un module de lecture à distance fixe au moyen d'un anneau anti-fraude

(30) Priority: 31.05.2011 EP 11305663; 28.09.2011 EP 11183056
(43) Date of publication of application: 05.12.2012
(73) Proprietor: Itron Global SARL, Liberty Lake WA 99019 (US)
(72) Inventor: Darras, Arnaud, 69007 Lyon (FR)
(74) Representative: Howson, Richard Giles Bentham

(56) References cited:
- EP-A1- 0 214 364
- EP-A1- 2 320 400
- WO-A2-2007/118291
- DE-U1-202007 003 276
- US-B1- 6 588 447

## Description

The invention relates to a fluid meter equipped with a remote reading module fixed by means of an anti-fraud ring.

Such a remote reading module is described in the patent document EP 1 571 428.

Such a module is relatively expensive and it is not generally economically justified to equip the meters of such modules in the course of manufacture. The solution therefore consists of pre-equipping the meters with means enabling remote reading modules to be fixed on the meters, as needed, either immediately in the factory or, the majority of the time, at a later stage. Moreover, the modules are generally fixed in a removable manner on the meters, which makes it possible, without having to change the meters, to change the modules for reasons imposed by administrative or technological constraints.

It is therefore known to produce a module capable of being fixed in a removable manner in a recess of the totaliser of the meter, this module including vertical fixing means consisting of a mechanical key formed by a recess intended to co-operate with a lug which is integral with the cover of the totaliser, and the lug can clip into the recess. The module also includes a profiled ribbed zone intended to be clipped onto a groove arranged on an edge of the receiving cavity, in the cover of the totaliser. Such a module can only be removed from its receiving cavity by lateral translation in order to release the key mechanical and the profiled zone.

In order to avoid any fraud by removal of the remote reading module, it is necessary to secure the module.

The patent document US 6,588,447 B1 describes a break-away ring manufactured from a frangible material and removably received by a water meter. The ring applies a holding pressure for retaining within the water meter a register to measure the volume of water consumed. The ring has a plurality of notches formed therein for the removal of the register. The patent document EP 2 295 941 describes a fluid meter equipped with a totaliser and a remote reading module disposed on this latter in a zone referred to as the upper zone, the totaliser being provided with a cover made from plastic material. This meter includes a ring for sealing of the module disposed around the said upper zone and joined to the cover of the totaliser.

This ring is joined to the cover of the totaliser by means of at least one non-removable clipping means with a breakable part, wherein this clipping means consists of a clipping tab arranged on the ring and introduced by rotation of the ring in a part of the belt loop type arranged in the cover of the totaliser.

Such an arrangement necessitates the production of this part of the belt loop type in the cover of the totaliser and therefore requires manufacture by moulding and the assembly of a specific cover. Moreover, this arrangement is relatively complex to manufacture.

The invention solves this problem.

In order to achieve this, the invention proposes a fluid meter equipped with a totaliser and a remote reading module contained in a housing and disposed on the totaliser in a zone referred to as the upper zone, the said totaliser being provided with a cover made from plastic material, the meter including a ring for sealing of the module disposed around the said upper zone and joined by means of a non-removable clipping means and characterised in that the said ring consists of a closed cylindrical piece and includes a breakable zone with reduced radial thickness bordered by two external radial flanges.

According to a preferred embodiment, these two flanges have different radial lengths.

By means of this arrangement, the ring can be removed either with a screwdriver or with pliers.

The said clipping means preferably includes a radial shoulder arranged in the said housing of the module and co-operating with the upper edge of the said ring.

The said clipping means advantageously consists of at least one radial shoulder arranged in the said cover of the totaliser and co-operating with the upper edge of the said ring.

The said shoulder preferably has an upper part with an extra thickness increasing progressively to the said shoulder.

The said ring advantageously includes a vertical lateral wall surmounted by a lateral wall inclined towards the interior.

The said ring is preferably made from styrene acrylonitrile.

The invention is described below in greater detail with the aid of drawings which show a preferred embodiment of the invention.
Figures 1A and 1B are perspective views of a meter according to the invention, in an exploded view and in an assembled view.
Figures 2A and 2B are views of a detail in vertical section.
Figures 3A and 3B are perspective views of a detail.
Figures 4A and 4B are views illustrating the removal of the ring.

In the foregoing and in what follows, the designations of orientation as "vertical", "horizontal", "upper" or "lower" are to be understood by considering the arrangement of the meter in these drawings.

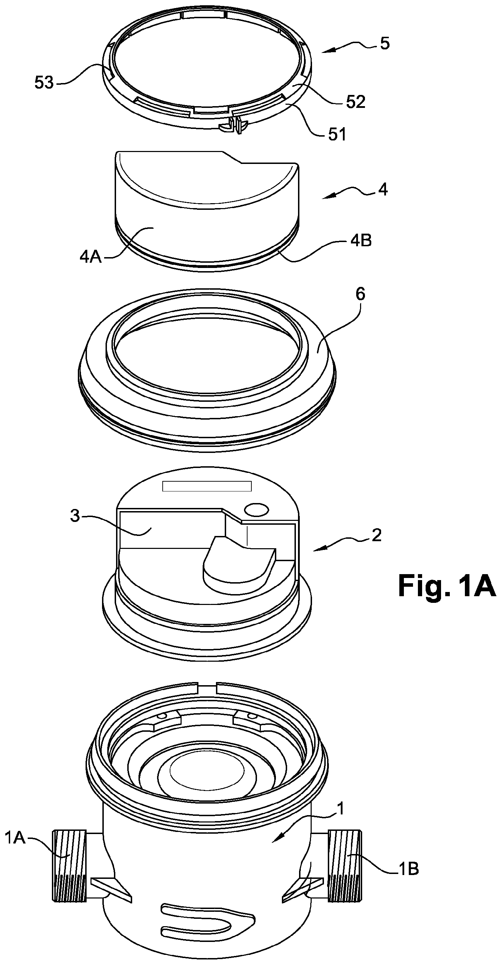

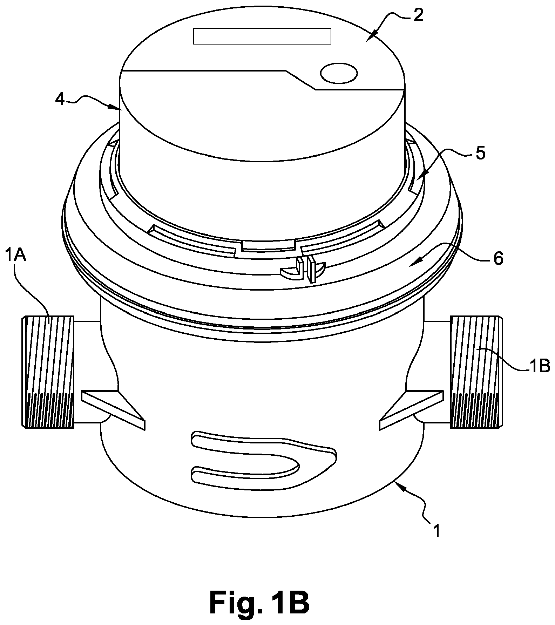

As shown in Figures 1A and 1B, a meter includes a reservoir 1 containing a measurement chamber provided with an inlet conduit section 1A for the fluid, in particular water, and an outlet conduit section 1B for the fluid. Mounted on this reservoir is a totaliser 2 intended for metering the flow rate and/or the volume of fluid and provided with a cover 3 made from plastic material joined to the reservoir 1 by means of a ring 6 clipped in a non-removable manner onto the reservoir and sandwiching the totaliser 2.

A remote reading module 4 contained in a housing 4A is disposed on this totaliser in a zone referred to as the upper zone. This module can be of the type described in the patent document EP 1 571 428 and is disposed in a receiving cavity arranged on the upper face of the totaliser 2.

A meter such as is illustrated in Figure 1A is intended to be equipped with a ring 5 for sealing of the module 4 consists of a closed cylindrical piece surrounding the whole of the totaliser 2 and of the module 4 and disposed around the upper zone. Such a ring 5 is shown in Figure 1A before it is fixed to the cover of the totaliser and in the Figure 1B after it is fixed to the cover of the totaliser.

The assembly of the ring is effected from the top downwards in order to arrive at the position shown in Figure 1B.

More precisely, this ring 5 includes a vertical lateral wall 51 surmounted by a lateral wall 52 inclined towards the interior and interrupted by flat areas 53 which constitute weakened zones of the ring 5 and lead to breakage of the ring in the event of an attempt to remove it.

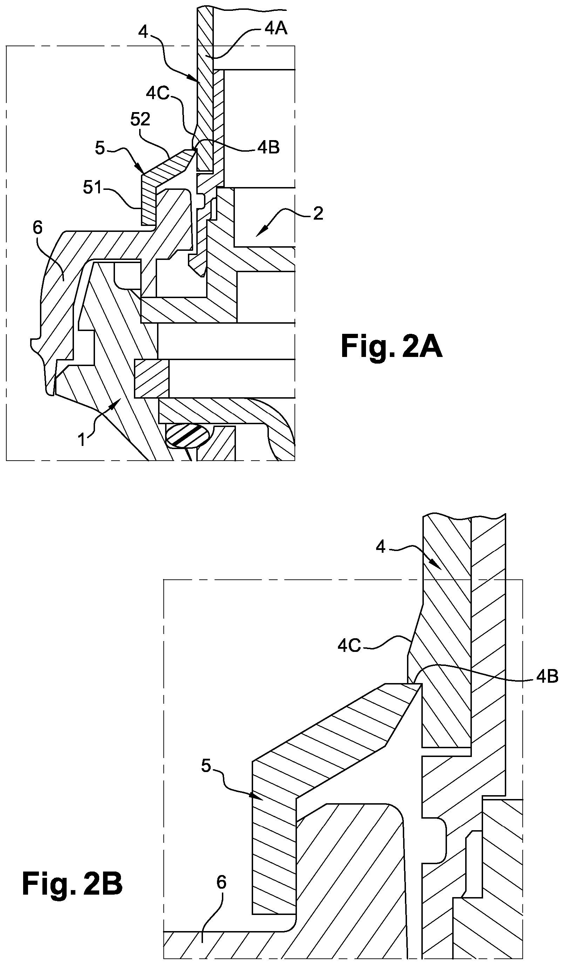

As can be seen in Figures 2A and 2B, the ring 5 is joined to the module 4 by means of a non-removable clipping means consisting of at least one peripheral radial shoulder 4B arranged in the cover 4A of the module.

The shoulder preferably has an upper part 4C with an extra thickness increasing progressively to the shoulder.

According to this embodiment, the ring 5 is disposed on the ring 6 for fixing of the totaliser 2 on the reservoir 1 and is clipped by abutment against the shoulder 4B after progressive resilient deformation as it slides on the upper part 4C.

During the assembly of the ring 5 from the top downwards, the upper edge of the ring 5 therefore becomes clipped on the shoulder 4B, ensuring non-removable fixing of the ring.

The same shoulder arrangement is preferably arranged on the cover 3 of the totaliser 2, in order to achieve clipping of the sealing ring 5 on the complete periphery of the whole of the totaliser 2 and of the module 4.

Thus the ring 5 prevents the lateral movement of the remote reading module 4 and, provided that this latter is auto-locked vertically in its receiving cavity arranged in the cover 3 of the totaliser, the module cannot be removed.

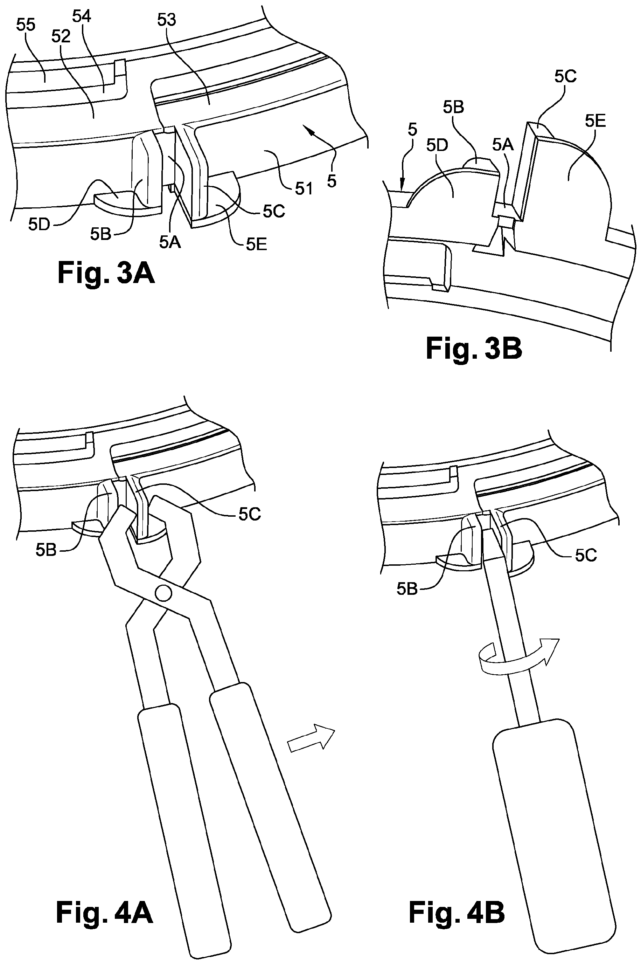

According to the invention, as can be seen in Figures 3A and 3B, the lateral wall 51 of the ring 5 includes a zone 5A with a breakable reduced radial thickness bordered by two external radial flanges 5B, 5C and these two flange have different radial lengths. These flanges 5B, 5C are reinforced by a horizontal base 5D, 5E. By way of example, the shorter flange 5B can have a radial length of 2 mm and the longer flange 5C can have a radial length of 5 mm.

In fact, according to the example shown, the breakable zone 5A overlaps the interface between the inclined lateral wall 52 and a flat area 53.

Moreover, the sealing ring 5 is provided with openings 54, as can be seen in Figure 3A, close to its inner face and bordered by a breakable interior wall 55 . Thus, if a fraudster attempts to remove the ring 5, by insertion of a blade or the like between this inner face and the module 4, trying to detach the ring 5 by leverage whilst acting on the entire periphery thereof, at least one of these walls 55 breaks and makes it possible to detect the fraud.

For the removal of the module, authorised by an operator or fraudulently by a fraudster, the ring 5 can be removed either with the aid of pliers as shown in Figure 4A, or with the aid of a screwdriver as illustrated in Figure 4B.

In the first case illustrated in Figure 4A, the longer flange 5C is gripped between the jaws of the pliers which, supported on the vertical lateral wall 51, apply a pulling force which ensures the breakage of the breakable zone 5A and then of all of the ring following this initiation of breakage.

In the second case illustrated in Figure 4B, the screwdriver is introduced between the two flanges 5B, 5C and by its rotation applies a torsional force ensuring the breakage of the breakable zone 5A and then of all of the ring following this initiation of breakage.

Thus removal is possible without any other part of the sealing ring 5 being damaged.

In order to facilitate its manufacture, the ring 5 is made from plastic material and preferably from styrene acrylonitrile known as SAN.

## Claims

1. Fluid meter equipped with a totaliser (2) and a remote reading module (4) contained in a housing (4A) and disposed on the totaliser in a zone referred to as the upper zone, the said totaliser being provided with a cover (3) made from plastic material, the meter including a ring (5) for sealing of the said module (4) disposed around the said upper zone and joined by means of a non-removable clipping means (4B) and **characterised in that** the said ring (5) consists of a closed cylindrical piece and includes a breakable zone (5A) with reduced radial thickness bordered by two external radial flanges (5B, 5C).

2. Meter as claimed in the preceding claim, **characterised in that** these two flanges (5B, 5C) have different radial lengths.

3. Meter as claimed in Claim 1 or 2, **characterised in that** the said clipping means preferably includes a radial shoulder (4B) arranged in the said housing (4A) of the module and co-operating with the upper edge of the said ring (5).

4. Meter as claimed in the preceding claim, **characterised in that** the said clipping means advantageously consists of at least one radial shoulder arranged in the said cover (3) of the totaliser and co-operating with the upper edge of the said ring (5).

5. Meter as claimed in Claim 3 or 4, **characterised in that** the said shoulder preferably has an upper part (4C) with an extra thickness increasing progressively to the said shoulder (4B).

6. Meter as claimed in any one of the preceding claims, **characterised in that** the said ring (5) includes a vertical lateral wall (51) surmounted by a lateral wall (52) inclined towards the interior.

7. Meter as claimed in any one of the preceding claims, **characterised in that** the said ring (5) is made from styrene acrylonitrile.

## Patentansprüche

1. Durchflussmesser, der mit einem Zählwerk (2) und einem Fernablesemodul (4) ausgestattet ist, das in einem Gehäuse (4A) enthalten ist und an dem Zählwerk in einer als obere Zone bezeichneten Zone angeordnet ist, wobei das Zählwerk mit einer Abdeckung (3) versehen ist, die aus einem Kunststoffmaterial hergestellt ist, wobei der Messer einen Ring (5) zum Versiegeln des Moduls (4), der um die obere Zone herum angeordnet ist und mittels eines nicht entfernbaren Klemmmittels (4B) angefügt ist, enthält, und **dadurch gekennzeichnet, dass** der Ring (5) aus einem geschlossenen zylindrischen Teil besteht und eine zerbrechbare Zone (5A) mit reduzierter radialer Dicke enthält, die von zwei äußeren radialen Flanschen (5B, 5C) begrenzt wird.

2. Messer nach dem vorhergehenden Anspruch, **dadurch gekennzeichnet, dass** diese beiden Flansche (5B, 5C) eine unterschiedliche radiale Länge aufweisen.

3. Messer nach Anspruch 1 oder 2, **dadurch gekennzeichnet, dass** das Klemmmittel vorzugsweise eine radiale Schulter (4B) enthält, die in dem Gehäuse (4A) des Moduls angeordnet ist und mit dem oberen Rand des Rings (5) zusammenwirkt.

4. Messer nach dem vorhergehenden Anspruch, **dadurch gekennzeichnet, dass** das Klemmmittel vorteilhafterweise aus mindestens einer radialen Schulter besteht, die in der Abdeckung (3) des Zählwerks angeordnet ist und mit dem oberen Rand des Rings (5) zusammenwirkt.

5. Messer nach Anspruch 3 oder 4, **dadurch gekennzeichnet, dass** die Schulter vorzugsweise einen oberen Teil (4C) mit einer zusätzlichen Dicke aufweist, die zu der Schulter (4B) hin allmählich zunimmt.

6. Messer nach einem der vorhergehenden Ansprüche, **dadurch gekennzeichnet, dass** der Ring (5) eine vertikale laterale Wand (51) enthält, die von einer zum Inneren geneigten lateralen Wand (52) überragt wird.

7. Messer nach einem der vorhergehenden Ansprüche, **dadurch gekennzeichnet, dass** der Ring (5) aus Styrol-Acrylnitril hergestellt ist.

## Revendications

1. Compteur de fluide muni d'un totaliseur (2) et d'un module de lecture à distance (4) contenu dans un boîtier (4A) et disposé sur le totaliseur dans une zone appelée zone supérieure, ledit totaliseur étant pourvu d'un couvercle (3) fabriqué en matière plastique, le compteur comportant une bague (5) pour sceller ledit module (4), disposée autour de ladite zone supérieure et assemblée par le biais d'un moyen d'enclipsage non amovible (4B) et
**caractérisé en ce que** ladite bague (5) est constituée d'une pièce cylindrique fermée et comporte une zone frangible (5A) d'épaisseur radiale réduite bordée par deux brides radiales extérieures (5B, 5C).

2. Compteur selon la revendication précédente, **caractérisé en ce que** ces deux brides (5B, 5C) ont des longueurs radiales différentes.

3. Compteur selon la revendication 1 ou 2, **caractérisé en ce que** ledit moyen d'enclipsage comporte de préférence un épaulement radial (4B) disposé dans ledit boîtier (4A) du module et coopérant avec le bord supérieur de ladite bague (5) .

4. Compteur selon la revendication précédente, **caractérisé en ce que** ledit moyen d'enclipsage consiste avantageusement en au moins un épaulement radial disposé dans ledit couvercle (3) du totaliseur et coopérant avec le bord supérieur de ladite bague (5) .

5. Compteur selon la revendication 3 ou 4, **caractérisé en ce que** ledit épaulement présente de préférence une partie supérieure (4C) ayant une épaisseur accrue augmentant progressivement jusqu'audit épaulement (4B).

6. Compteur selon l'une quelconque des revendications précédentes, **caractérisé en ce que** ladite bague (5) comporte une paroi latérale verticale (51) surmontée par une paroi latérale (52) inclinée vers l'intérieur.

7. Compteur selon l'une quelconque des revendications précédentes, **caractérisé en ce que** ladite bague (5) est fabriquée en styrène acrylonitrile.
